# EUROPÄISCHE PATENTSCHRIFT

(11) **EP 1 853 927 B1**
(45) Veröffentlichungstag und Bekanntmachung des Hinweises auf die Patenterteilung: **08.05.2013**
(21) Anmeldenummer: 06708380.8
(22) Anmeldetag: 20.02.2006
(51) Int. Cl.: G01P 3/489, G01P 3/481, G01D 5/244

(54) **MIT ENCODERÜBERWACHUNGSSCHALTUNG AUSGESTATTETER SENSOR ZUR ERFASSUNG VON BEWEGUNGEN UND UND ENTSPRECHENDES ENCODERÜBERWACHUNGSVERFAHREN**
MOTION SENSOR EQUIPPED WITH ENCODER MONITORING CIRCUIT AND CORRESPONDING ENCODER MONITORING METHOD
DETECTEUR DE MOUVEMENT EQUIPÉ D'UN CIRCUIT DE SURVEILLANCE D'UN ENCODEUR ET PROCEDE CORRESPONDENT DE SURVEILLANCE D'UN ENCODEUR

(30) Priorität: 03.03.2005 DE 102005010275; 17.02.2006 DE 102006007871
(43) Veröffentlichungstag der Anmeldung: 14.11.2007
(73) Patentinhaber: Continental Teves AG & Co. oHG, 60488 Frankfurt am Main (DE)
(72) Erfinder: ZACHOW, Jochen, 74850 Schefflenz (DE); ECKRICH, Jörg, 65201 Wiesbaden (DE); BÖHM, Sven, 63179 Obertshausen (DE)
(86) Internationale Anmeldenummer: PCT/EP2006/060097
(87) Internationale Veröffentlichungsnummer: WO 2006/092365

(56) Entgegenhaltungen:
- EP-A- 1 475 292
- WO-A-98/54483

## Beschreibung

Die Erfindung betrifft einen Sensor gemäß Oberbegriff von Anspruch 1 und ein Verfahren gemäß Oberbegriff von Anspruch 7, insbesondere zur Verwendung in Kraftfahrzeugen.

Vorrichtungen zur Raddrehzahlerfassung in Kraftfahrzeugen (Kfz) sind im Prinzip bekannt. Sie bestehen im Wesentlichen aus einem Encoder und einem Sensor, der mit dem Encoder über einen Luftspalt magnetisch gekoppelt ist. Der Encoder ist ein Maschinenelement, das mit dem drehenden Ring eines Radlagers mechanisch verbunden ist und einen inkrementalen Winkelmaßstab trägt. Der Winkelmaßstab wird als ganzzahlige Folge magnetisch abwechselnd unterschiedlich wirksamer Areale ausgeführt, die eine kreisförmige Encoderspur bilden. Es ist üblich, als Encoder Zahnräder, ferromagnetische Lochscheiben oder permanentmagnetisierte Strukturen zu verwenden, z. B. magnetisierte Radlagerdichtungen. Der Sensor reagiert auf die periodischen Wechsel Zahn/Lücke bzw. Loch/Steg oder Nord-/Südpol mit einem periodischen elektrischen Signal, das die inkrementale Winkelteilung als zeitlichen Spannungs- oder Stromverlauf abbildet. Als sensorisch wirksame Bauteile werden hauptsächlich Induktionsspulen, magnetoresistive Brücken und Hall-Elemente verwendet, die zum Teil in Kombination mit zusätzlichen elektronischen Schaltungen betrieben werden. Es ist üblich, Sensoren als "aktive Sensoren" zu bezeichnen, wenn sie zum Betrieb eine Energieversorgung benötigen und als "passive" Sensoren wenn sie, wie Induktionsspulen, zum Betrieb keine zusätzliche Energieversorgung benötigen.

Um in solchen Sensoranordnungen größere Luftspaltlängen realisieren zu können ist es bereits vorgeschlagen worden die inkrementelle Winkelauflösung des Encoders zu halbieren und diese danach durch Verdopplungsmechanismen unter Verwendung zueinander ortsverschobener Sensoren wieder zu kompensieren. So wird in der DE 199 06 937 die Verwendung von zwei GMR-Sensoren angeregt, deren örtliche Anordnung zueinander eine Phasenverschiebung von etwa 90° bewirkt. Die Signale (S1,S2) der beiden Sensoren werden verstärkt, über Schwellenschalter geführt und exklusiv-oderverknüpft. Mit Hilfe von Flip-Flop-Schaltungen soll zudem die Drehrichtung ermittelt werden. Es wird weiterhin vorgeschlagen, die Sensoren gemeinsam auf einem Chip anzuordnen, um den Abstand zwischen beiden Sensoren möglichst präzise einhalten zu können.

Die Anwendung dieses Standes der Technik unterliegt in der Praxis mehreren hinderlichen Einschränkungen. So ist es für den Anwendungsfall der Raddrehzahlerfassung im Automobil erforderlich, gleiche Sensoren mit Encodern unterschiedlicher Module kombinieren zu können (Modul = Lesedurchmesser / Encoderperiodenzahl). Erfahrungsgemäß bewegt sich der Modulbereich zwischen 1,2 mm bis 2,5 mm, d.h. es muss ein Verhältnis der möglichen Module von 2,5 / 1,2 = ca. 2 abgedeckt werden. Um stets etwa eine Phasenverschiebung von 90° einhalten zu können müssten unter dieser Maßgabe eine größere Anzahl unterschiedlicher, an verschiedene Module angepasste Sensoren bereitgehalten werden. Diese Notwendigkeit steht dem Bestreben nach wirtschaftlicher Fertigung und hoher Qualität großer Stückzahlen eines gleichen Produktes entgegen. Wird auf die Modulanpassung verzichtet, entsteht andererseits der Nachteil, dass mit zunehmender Phasenabweichungen vom Sollwert 90° jeder der exklusiv-oder-verknüpften sensorischen Kanäle ein individuell schwankendes Tastverhältnis zum Gesamtsignal beisteuert, was in Folge den Jitter, für den Betrieb moderner Bremsregler, unzulässig erhöht.

Werden zur weiter oben beschriebenen Verdopplung des Ausgangssignals die zwei phasenverschobene Signale S1 und S2 der Sensorelemente geeignet verarbeitet und dann vereinigt, so erhält man die Sollfrequenz f₂.

Die aus dem Stand der Technik bekannten Sensoren weisen das Problem auf, dass in den Ausgangssignalen der Sensorelemente Fehler auftreten. Diese Fehler verändern das Ausgangssignal eines Sensorelements derart, dass es von seinem, der Anwendung entsprechenden, typischen Verlauf abweicht bzw. dass der Signalverlauf Störungen aufweist. Diese zu beseitigenden Fehler können auf einer Vielzahl unterschiedlicher Effekte beruhen. In diesem Zusammenhang ist beispielhaft der Effekt zu nennen, dass durch einen ungenauen Abstand bzw. eine ungenaue Positionierung zwischen Encoder und Sensor oder durch Abstandsschwankungen, das Sensorsignal gestört bzw. verfälscht wird. Dabei haben diese Störungen unter anderem häufig eine Ausprägung als Oberwellenanteile im Sensorsignal oder anders artige Frequenzschwankungen des Signals. Diese Fehler können sich auch im Verlauf der weiteren Signalverarbeitung bemerkbar machen. Dabei ergeben sich sogar in einigen Fällen Verstärkungen dieser Fehler, insbesondere wenn die jeweilige Signalamplitude über bestimmte Schwellwerte bewertet wird, bzw. der weitere Signalverlauf sich an solchen Schwellwerten orientiert. Diesbezüglich können neben verstärkten Amplitudenfehlern auch besonders verstärkte Frequenzfehler auftreten, da sich Störungen, welche sich als fehlerhafte Oberwellenanteile ausprägen und vom Amplitudenwert her im Bereich eines Schwellwertes liegen, als schnelle sprunghafte Amplitudenwechsel darstellen.

Die Schriften EP 1 475 292 A und WO 98/54483 A zeigen Überwachungsschaltungen für aus Encoder und zwei versetzt hintereinander angeordneten Sensoren gebildeten Detektoren. Die Schaltungen prüfen, ob nach erfolgten Signalflanken eines ersten Sensorsignals eine Signalflanke eines zweiten Sensorsignals erscheint. Erkennung eines Fehlers, falls diese Flanke des zweiten Signals ausbleibt.

Die vorliegende Erfindung geht daher von einem Sensor bzw. einem Verfahren aus, welches sich aus dem Oberbegriff von Anspruch 1 bzw. 7 ergibt.

Die Aufgabe der vorliegenden Erfindung in der zeitweiligen Unterdrückung oder Korrektur von aus den Ausgangssignalen versetzt angeordneter Sensorelemente gebildeten Zwischensignalen zur Vermeidung einer inkorrekten Ansteuerung eines Kraftfahrzeugregelsystems.

Die Aufgabe wird erfindungsgemäß gelöst durch einen Sensor gemäß Anspruch 1 und ein Verfahren gemäß Anspruch 7.

Die Erfindung besteht also hinsichtlich des erfindungsgemäßen Sensors im Kern darin, die Ausgangsignale der Sensorelemente bzw. die von diesen abgeleiteten Signale auf Fehler zu überprüfen und in Anhängigkeit von festgestellten Fehlern das Sensorausgangssignal abzuschalten oder zu korrigieren.

Im einfachsten Fall wird die Korrektur bzw. Abschaltung des Sensorausgangssignals direkt von der Feststellung eines Fehlers der Elementausgangssignale abhängig gemacht. Erfindungsgemäßer- folgt aber die Formung des Sensorausgangssignals über die Bildung von Zwischensignalen, wie dies z.B. in der DE 199 06 937 Al oder in der Schrift WO 03087845 A2 wie folgt erläutert ist:
Unter einer magnetoresistiven Brücke wird eine magnetisierte Encoderspur vorbei bewegt. Die vier Brückenwiderstände sind bis auf deren Wirkrichtung gegenüber dem Magnetvektor des Encoders weitestgehend identisch. Die jeweils vorliegende Wirkrichtung ist durch die Symbole (+) und (-) gekennzeichnet und bedeuten Zunahme oder Abnahme des Brückenwiderstandes unter gleicher Feldrichtung, so dass die Entstehung von zwei Teilspannungen klar wird. Zwischen den Brückenzweigen besteht ein örtlicher Abstand ϕ. Bei positiver Ortsphase mit dem Nulldurchgang der Signalfunktion DIF korrespondiert ein Extremwert der Signalfunktion SUM, so dass die Signalverläufe zueinander orthogonal bleiben, also stets 90° Phasenverschiebung zueinander aufweisen. Das gleiche gilt für eine negative Ortsphase. Der Zusammenhang ist von der Größe der Ortsphase im angestrebten Modulverhältnis 2:1 unabhängig und erfüllt damit das gewünschte Ziel. Es wird vorzugsweise vorgeschlagen, bei dem kleinsten gewünschten Modul im Sensor ca. 40° Ortsphase zu realisieren.

Es empfiehlt sich in Weiterbildung der Erfindung die Verwendung der Merkmale nach Anspruch 2 (bei Anwendung von zwei oder mehr Zwischensignalen S1*, S2*)). Derartige Zwischensignale können z.B. mittels einer Schwellwertschaltung gebildet werden, die jeweils dem Ausgang eines Sensorelementes zugeordnet ist oder mittels einer Summen- und einer Differenzschaltung (Summenbilder beziehungsweise Differenzbilder), denen jeweils beide Ausgänge der Sensorelemente zugeführt werden.

Bevorzugt wird bei oben genannten Sensorelementen, welche insbesondere einem sich bewegenden Encoder gegenüber eine verdoppelnde Signalfrequenz ausgeben und dazu die Auswertung von zwei Signalpfaden benutzen, die zu beseitigenden Fehler im Ausgangssignal korrigiert oder unterdrückt werden, indem eine falsche Frequenzausgabe korrigiert oder unterdrückt wird.

Erfindungsgemäβ wird in der Verrechnungsstufe mindestens ein Zwischensignal gebildet, dessen Frequenz jeweils von den Frequenzen der beiden Elementausgangssignale abhängt und prüft, die Prüfungsschaltung das Zwischensignal auf Abweichungen, welche aus Fehlern der Elementausgangssignale resultieren. Durch die Prüfung auf Abweichungen können Fehler bzw. Störungen erkannt werden.

Eine besonders einfache Ausgestaltung der Prüfschaltung ergibt sich in Weiterbildung der Erfindung durch die Verwendung der Merkmale nach Anspruch 3 oder 5, je nach festgestelltem Fehler.

Bevorzugt schaltet die Prüfschaltung das Sensorausgangssignal ab, wenn zwei oder mehr nacheinander auftretende Flanken der Zwischensignale zu dem gleichen Zwischensignal gehören. Hierdurch wir im Fehlerfall eine inkorrekte Ansteuerung eines Kraftfahrzeugregelungssystems vermieden.

Erfindungsgemäβ sind beim Ausfall einer Flanke des einen Zwischensignals die Flanken des anderen Zwischensignals solange unwirksam geschaltet, bis wieder eine Flanke des einen Zwischensignals erscheint, so dass in diesem Zeitraum keine Flanke zur Bildung des Sensorausgangssignals wirksam ist. Nach dem Auftreten eines Fehlers und der sich daraus ergebenden Abschaltung des Ausgangssignals, bleibt die Verarbeitungsschaltung aktiv und registriert, wann wieder korrekte Signale auftreten, damit das Ausgangssignal wieder ausgegeben werden kann.

Es ist zweckmäßig, dass die Prüfschaltung mit einer Einrichtung zur Frequenzerkennung versehen ist, welche die Frequenzen der Zwischensignale und/oder der Elementausgangssignale überprüft und bei Unregelmäßigkeiten der jeweiligen Frequenzen das Sensorausgangssignal und/oder zumindest ein Zwischensignal unwirksam macht. Dadurch können Fehler bzw. Störungen wirksam erkannt werden und der fehlerhafte Signalpfad kann direkt unterdrückt werden.

Weitere vorteilhafte Ausführungsformen der Erfindung ergeben sich aus den abhängsgen Asprüche und der nachfolgenden Beschreibung eines Ausführungsbeispiels an Hand von Figuren.

Es zeigen in schematischer Darstellung
Fig. 1 den Aufbau eines erfindungsgemäßen Sensors,
Fig. 2 den Verlauf ungestörter Ausgangssignale der Sensorelemente,
Fig. 3 den Verlauf von Zwischensignalen in Abhängigkeit von Elementausgangssignalen gemäß Fig. 2,
Fig. 4 den Verlauf des Sensorausgangssignals in Abhängigkeit von den Zwischensignalen gemäß Fig. 3,
Fig. 5 den Verlauf gestörter Elementausgangssignale der Sensorelemente,
Fig. 6 den Verlauf von Zwischensignalen in Abhängigkeit von Elementausgangssignalen gemäß Fig. 5 und
Fig. 7 den Verlauf des korrigierten Sensorausgangssignals in Abhängigkeit von den Zwischensignalen gemäß Fig. 5.

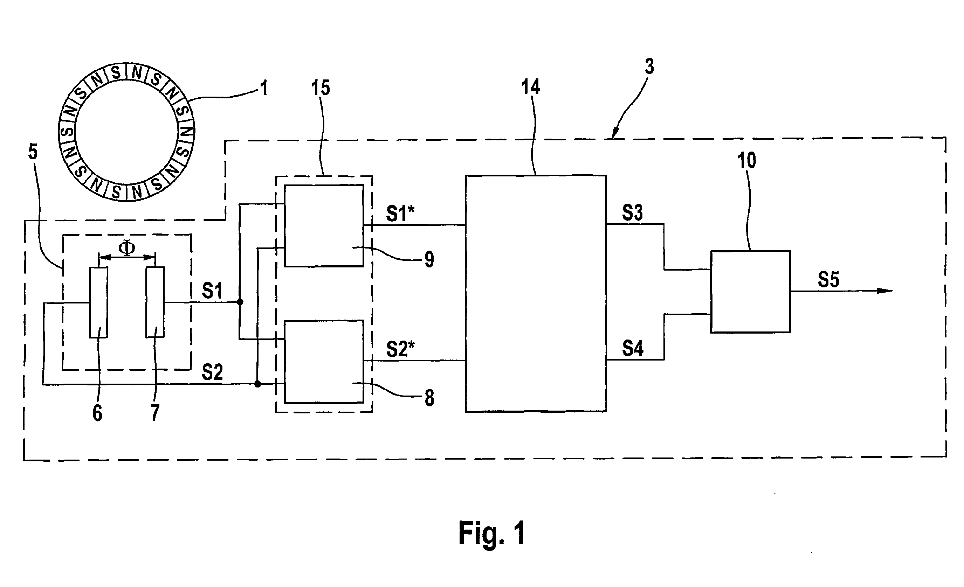

Wie in Fig. 1 dargestellt, ist in der erfindungsgemäßen Anordnung ein Encoder 1 enthalten, der magnetisch gekoppelt mit einem aktiven Sensor 3 zusammenwirkt, welcher seinerseits mittels des Sensorsausgangssignals 5 Raddrehzahlsignale an eine nicht dargestellte elektronische Kontrolleinrichtung sendet. Als Encoder werden hier allgemein Maschinenelemente bezeichnet, die als inkrementelle Maßstabsverkörperung ausgebildet sind. Zur Erläuterung der Erfindung werden vorrangig Winkelmaßstäbe verwendet, jedoch gelten alle Ausführungen gleichermaßen für lineare Wegmaßstäbe. Der Winkelmaßstab besteht aus einer ganzzahligen Folge gleichartiger Areale einander abwechselnder magnetischer Nord - und Südpole, die eine zu einem Kreis geschlossenen Encoderspur bilden.

Zur Raddrehzahlerfassung ist Encoder 1 mit dem drehenden Ring des Radlagers mechanisch verbunden und der magnetische Feldstärkeverlauf der Encoderspur wird durch den ortsfesten aktiven Sensor 3 magnetisch berührungslos über einen Luftspalt erfasst. Der Encoder rotiert mit einer Winkelgeschwindigkeit ω.

In Sensor 3 befindet sich ein magnetoelektrischer Wandler 5, der zwei Sensorlemente 6, 7 aufweist, die um den Abstand Φ gegeneinander versetzt sind, und die so wirken, dass bei einem rotierenden Encoder, zwei Signale S₁ = A * sin (ωₜ) und S₂ = -A * sin (ωₜ + ϕ) erzeugt werden. Die Elementausgangssignale S₁ und S₂ der Sensorelemente werden einer Verrechnungsstufe 15 zugeführt. Verrechnungsstufe 15 enthält zwei Kanäle. Im ersten Kanal 8 wird die Teilsignalsumme SUM = S₁ + S₂ und im zweiten Kanal 9 die Teilsignaldifferenz DIF = S₁ S₂ gebildet. Die Zwischensignale S1* und S2* an den Ausgängen der Kanäle 8, 9 werden mittelbar zu einer als exklusiv-oder-Schaltung ausgestalteten Vereinigungsschaltung 10 geführt. Das aus SUM und DIF sich mittelbar ergebende Sensorausgangssignal S5 hat die vorteilhafte Eigenschaft, dass im störungsfreien Betrieb weitgehend modul-unabhängig stets ein Gesamtsignal mit symmetrischem Tastverhältnis erzeugt wird, mit dem zugleich die gewünschte Frequenzverdopplung erreicht wird.

Zwischen die als exklusiv-oder-Schaltung ausgestalteten Vereinigungsschaltung 10 und die Ausgänge der Verrechnungsstufe 15 ist erfindungsgemäß eine Prüfschaltung 14 geschaltet, die in Abhängigkeit von S1 und S2 oder in Abhängigkeit von S1* und S2* die Ausgabe ihrer Prüfausgangsignale S3, S4 steuert. Die Prüfschaltung 14 kann z.B. die Frequenzen der beiden Signale S1* und S2* vergleichen, wobei dies vorzugsweise durch eine Bewertung der Flankenfolge geschieht, und auf Basis dieses Frequenzabgleichs entscheiden, ob ein Fehler bzw. eine Störung vorliegt.

Sind die Signale S1* und S2* bzw. die Signale S1 und S2 korrekt, so können diese in Form von S3, S4 die Prüfschaltung 14 passieren und werden durch die Vereinigungsschaltung 10 zu dem Sensorausgangssignal S5 zusammengesetzt. Dabei springt das Sensorsausgangsignal S5 mit jeder neu eintreffenden Flanke von S3 und S4 zwischen zwei Potentialen auf und ab, sodass als Folge der exklusiv-oder-Verknüpfung der beiden Signale S3 und S4 das Sensorausgangsignal S5 nur dann ein positives Potential hat, wenn entweder nur S3 oder nur S4 ein positives Potential besitzt.

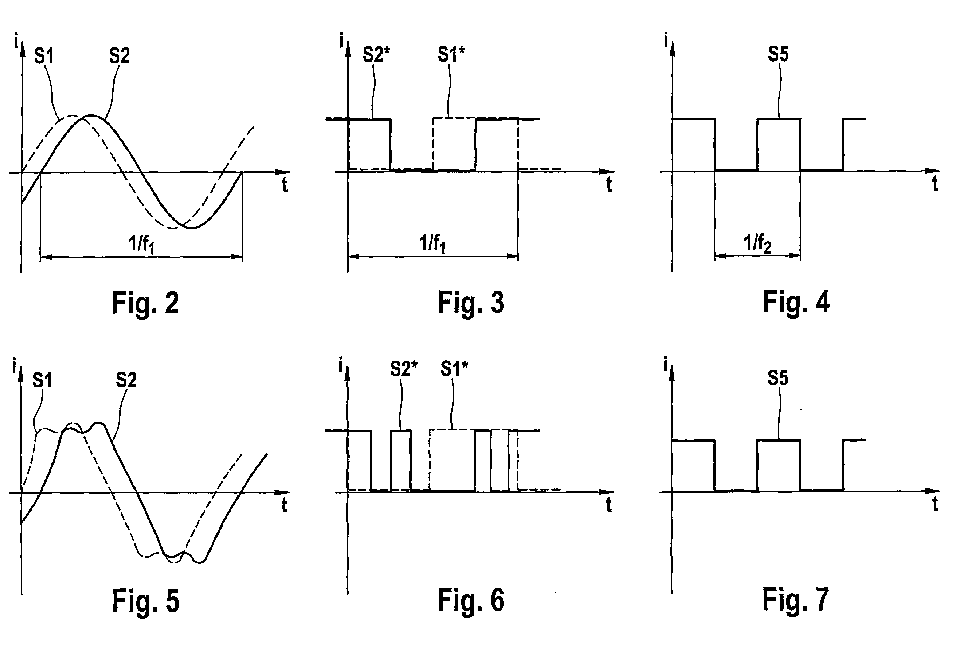

Diese Zusammenhänge sind in den Figuren 2, 3 und 4 dargestellt. Die beiden um einen Winkel, welcher 90° betragen kann, versetzten sinusförmigen Elementausgangsignale S1 und S2, werden in der Verrechnungsstufe 15 zu den Signalen S1* und S2* umgeformt, die um 90° versetzt sind, wie in den schon weiter oben angegebenen Literaturstellen erläutert wurde. Das Sensorsausgangsignal S5 der Vereinigungsschaltung 10 besitzt infolgedessen die in Fig.4 dargestellte Form.

Hinsichtlich Fig. 5 wird angenommen, dass S1 und S2 mit Fehlern in Form von Oberwellen behaftet sind, die beispielsweise zu einer zeitweiligen Frequenzänderung des Signals S2* in Fig. 6 führen, welches durch den Summenbildner erzeugt wurde. Das Auftreten von Frequenzschwankungen, Oberwellen oder anderen Signalfehlern auf mindestens einem der beiden Signale S1 und S2 kann auch zu einer Störung von sowohl S1*, als auch S2*, führen. Die Oberwellen können beispielsweise dadurch entstehen, dass die Sensorelemente des Wandlers 5 einen zu geringen Abstand oder Abstandsschwankungen zu dem Encoder 1 aufweisen.

Die Prüfschaltung 14 arbeitet nun derart, dass sie eine Bewertung vornimmt, ob die Flanken von S1* und S2* in Bezug auf ihren zeitlichen Verlauf in korrekter Weise abwechselnd auftreten. In diesem Falle entsprechen die Signalverläufe von S3 und S4 den Signalverläufen von S1* und S2*.

Tritt allerdings auf Grund einer Störung z. B. die Flanke von S2* fehlerhafterweise mehrfach unmittelbar hintereinander auf, wie in Fig. 6 dargestellt, so wird nur die erste Flanke wirksam, die weiteren Flanken von S2* werden solange unterdrückt bzw. herausgefiltert bis eine Flanke von S1 erscheint. Es ergibt sich somit das korrigierte Sensorsausgangsignal S5 gemäß Fig. 7.

Fehlt eines der Zwischensignale S1* oder S2*, (z.B. S2*) und wird seine Flanke durch die Prüfschaltung 14 nicht festgestellt, so wird das dem anderen Zwischensignal (z. B. S1*) zugeordnete Ausgangssignal (z.B. S3) durch die Prüfschaltung 14 so lange nicht ausgegeben, bis die Flanke des betreffenden Zwischensignals nicht mehr fehlt. Da somit weder S4 (wegen des fehlenden S2*) noch S3 ausgegeben werden, kann durch die Vereinigungsschaltung kein Signal S5 gebildet werden, sodass während dieses Fehlerfalles die nachgeschaltete Regelung auf Grund eines fehlenden Sensorsausgangsignals S5 abgeschaltet wird.

## Patentansprüche

1. Sensor (3) zur Erfassung der Bewegung eines zu überwachenden Encoders mit mindestens zwei, in Bewegungsrichtung des Encoders zueinander versetzt angeordneten Sensorelementen (6,7) und mit einer Verarbeitungsschaltung (10,14,15), welche die Elementausgangssignale (S1,S2) an den Ausgängen der Sensorelemente (6,7) zu einem Sensorausgangssignal (S5) umformt, welches die Bewegung des Encoders beschreibt, wobei die Verarbeitungsschaltung (10,14,15) mit einer Prüfschaltung (14) versehen ist, welche zumindest mittelbar die Elementausgangssignale (S1,S2) überwacht und bei festgestellten Fehlern der Elementausgangssignale (6,7) das Sensorausgangssignal (S5) unwirksam macht oder korrigiert, wobei in einer Verrechnungsstufe (15) mindestens zwel Zwischensignale (S1*,S2*) gebildet werden, denen Frequenz von den Frequenzen der beiden getrennten Elementausgangssignale (6,7) abhängt und wobei die Prüfschaltung (14) die Zwischensignale (S1* bzw. S2*) auf Abweichungen prüft, welche durch Fehler der Elementausgangssignale (6,7) bedingt sind, **dadurch gekennzeichnet, dass** beim Ausfall einer Flanke des einen Zwischensignals (S1*,*S2**) die Flanken des anderen Zwischensignals (*S1**, *S2**) solange unwirksam geschaltet sind, bis wieder eine Flanke des einen Zwischensignals (S1*,*S2**) erscheint, so dass in diesem Zeitraum keine Flanke zur Bildung des Sensorausgangssignals (S5) wirksam ist.

2. Sensor nach Anspruch 1, **dadurch gekennzeichnet, dass** in der Verrechnungsstufe (15) zwei Zwischensignale (S1*,S2*) gebildet werden, dass die Bildung der Flanken der Zwischensignale durch die Prüfschaltung von den Flanken der zueinander phasenverschobenen, regelmäßig gleichfrequenten Elementausgangssignalen (6,7) abhängig ist und dass die Prüfschaltung (14) die Zwischensignale daraufhin überprüft, ob die auftretenden Flanken der Zwischensignale zeitlich nacheinander abwechselnd von unterschiedlichen Zwischensignalen stammen.

3. Sensor nach Anspruch 1 oder 2, **dadurch gekennzeichnet, dass** die Prüfschaltung (14) das Sensorausgangssignal (S5) abschaltet, wenn zwei oder mehr nacheinander auftretende Flanken der Zwischensignale (S1*, S2*) zu dem gleichen Zwischensignal gehören.

4. Sensor nach mindestens einem der Ansprüche 1 bis 3, **dadurch gekennzeichnet, dass** die Flanken des Sensorausgangssignals (S5) in der Verarbeitungsschaltung (10,14,15) beim abwechselnden regelmäßigen Auftreten der Flanken der beiden Zwischensignale (S1*, S2*) derart gebildet werden, dass das Sensorausgangssignal die doppelte Frequenz der Zwischensignale besitzt, wobei die Flanken des Sensorausgangssignals abwechselnd den Flanken der Zwischensignale zugeordnet sind.

5. Sensor nach mindestens einem der Ansprüche 1 bis 4, **dadurch gekennzeichnet, dass**, falls mehrere Flanken eines bestimmten Zwischensignals (S1*,S2*) unmittelbar hintereinander erscheinen, nur die erste Flanke im Sinne der Bildung einer Flanke des Sensorausgangssignals (S5) wirksam ist.

6. Sensor nach mindestens einem der Ansprüche 1 bis 5, **dadurch gekennzeichnet, dass** die Prüfschaltung (14) mit einer Einrichtung zur Frequenzerkennung versehen ist, welche die Frequenzen der Zwischensignale (S1*, S2*) und/oder der Elementausgangssignale (S1,S2) überprüft und bei Unregelmäßigkeiten der jeweiligen Frequenzen das Sensorausgangssignal (S5) und/oder zumindest ein Zwischensignal (S1*,S2*) unwirksam macht.

7. Verfahren zur Überwachung und Beseitigung von Sensorfehlern in einem Sensor (3) zur Erfassung der Bewegung eines Encoders mit mindestens zwei, in Bewegungsrichtung des Encoders zueinander versetzt angeordneten Sensorelementen (6,7) und mit einer Verarbeitungsschaltung (10,14,15), welche die Elementausgangssignale (S1, S2) an den Ausgängen der Sensorelemente (6,7) zu einem Sensorausgangssignal (S5) umformt, welches die Bewegung des Encoders beschreibt, wobei eine Prüfschaltung (14) in einer Verarbeitungsschaltung (10,14,15) zumindest mittelbar die Elementausgangssignale (S1, S2) überwacht und bei festgestellten Fehlern der Elementausgangssignale (6,7) das Sensorausgangssignal (S5) unwirksam macht oder korrigiert, wobei in einer Verrechnungsstufe (15) mindestens zwei Zwischensignale (S1*,S2*) gebildet werden deren Frequenz von den Frequenzen der beiden getrennten Elementausgangssignale (6,7) abhängt und wobei die Prüfschaltung (14) die Zwischensignale (S1*,S2*) auf Abweichungen prüft, welche durch Fehler der Elementausgangssignale (6,7) bedingt sind, **dadurch gekennzeichnet, dass** beim Ausfall einer Flanke des einen Zwischensignals (S1*,*S2**) die Flanken des anderen Zwischensignals (*S1**,*S2**) solange unwirksam geschaltet werden, bis wieder eine Flanke des einen Zwischensignals (S1*, *S2**) auftritt, so dass in diesem Zeitraum keine Flanke zur Bildung des Sensorausgangssignals (S5) wirksam ist.

8. Verfahren nach Anspruch 7, **dadurch gekennzeichnet, dass** in der Verrechnungsstufe (15) vorzugsweise zwei Zwischensignale (S1*, S2*) gebildet werden, dass die Bildung der Flanken der Zwischensignale durch die Prüfschaltung von den Flanken der zueinander phasenverschobenen, regelmäßig gleichfrequenten Elementausgangssignale (6,7) abhängt und dass die Prüfschaltung (14) die Zwischensignale daraufhin überprüft, ob die auftretenden Flanken der Zwischensignale zeitlich nacheinander abwechselnd von unterschiedlichen Zwischensignalen stammen.

9. Verfahren nach Anspruch 7 oder 8, **dadurch gekennzeichnet, dass** die Prüfschaltung (14) das Sensorausgangssignal (S5) abschaltet, wenn zwei oder mehr nacheinander auftretende Flanken der Zwischensignale (S1*,S2*) zu dem selben Zwischensignal gehören.

10. Verfahren nach mindestens einem der Ansprüche 7 bis 9, **dadurch gekennzeichnet, dass** die Flanken des Sensorausgangssignals (S5) in der Verarbeitungsschaltung (10,14,15) beim abwechselnd regelmäßigen Auftreten der Flanken der beiden Zwischensignale (S1*, S2*) derart gebildet werden, dass das Sensorausgangssignal die doppelte Frequenz der Zwischensignale besitzt, wobei die Flanken des Sensorausgangssignals abwechselnd den Flanken der Zwischensignale zugeordnet sind.

11. Verfahren nach mindestens einem der Ansprüche 7 bis 10, **dadurch gekennzeichnet, dass**, falls mehrere Flanken eines bestimmten Zwischensignals (S1*,*S2**) unmittelbar hintereinander erscheinen, nur die erste Flanke im Sinne der Bildung einer Flanke des Sensorausgangssignals (S5) wirksam ist.

12. Verfahren nach mindestens einem der Ansprüche 7 bis 11, **dadurch gekennzeichnet, dass** die Prüfschaltung (14) mit einer Einrichtung zur Frequenzerkennung versehen ist, welche die Frequenz der Zwischensignale (S1*, *S2**) und/oder der Elementeausgangssignale (S1,S2) überprüft und bei Unregelmäßigkeiten einzelnen Frequenzen das Sensorausgangssignal (S5) und/oder zumindest ein Zwischensignal (S1*, S2*) unwirksam macht.

## Claims

1. Sensor (3) for detecting the movement of an encoder to be monitored, having at least two sensor elements (6, 7) which are arranged with an offset with respect to one another in the direction of movement of the encoder, and having a processing circuit (10, 14, 15) which converts the element output signals (S1, S2) at the outputs of the sensor elements (6, 7) into a sensor output signal (S5) which describes the movement of the encoder, the processing circuit (10, 14, 15) being provided with a test circuit (14) which at least indirectly monitors the element output signals (S1, S2) and renders the sensor output signal (S5) ineffective or corrects the latter if errors are determined in the element output signals (6, 7), at least two intermediate signals (S1*, S2*) being formed in an accounting stage (15), the frequency of which signals depends on the frequencies of the two separate element output signals (6, 7), and the test circuit (14) testing the intermediate signals (S1* and S2*) for deviations which are caused by errors in the element output signals (6, 7), **characterized in that**, in the absence of an edge of the one intermediate signal (S1*, *S2**), the edges of the other intermediate signal (*S1*,* S2*) are switched to be ineffective until an edge of the one intermediate signal (S1*, *S2**) appears again, with the result that no edge is effective for forming the sensor output signal (S5) in this period of time.

2. Sensor according to Claim 1, **characterized in that** two intermediate signals (S1*, S2*) are formed in the accounting stage (15), **in that** the formation of the edges of the intermediate signals by the test circuit is dependent on the edges of the element output signals (6, 7) which are phase-shifted with respect to one another and are regularly at the same frequency, and **in that** the test circuit (14) checks the intermediate signals in order to determine whether the occurring edges of the intermediate signals alternately come from different intermediate signals in temporal succession.

3. Sensor according to Claim 1 or 2, **characterized in that** the test circuit (14) switches off the sensor output signal (S5) if two or more edges of the intermediate signals (S1*, S2*) occurring in succession belong to the same intermediate signal.

4. Sensor according to at least one of Claims 1 to 3, **characterized in that** the edges of the sensor output signal (S5) are formed in the processing circuit (10, 14, 15) during alternating regular occurrence of the edges of the two intermediate signals (S1*, S2*) in such a manner that the sensor output signal is at twice the frequency of the intermediate signals, the edges of the sensor output signal being alternately associated with the edges of the intermediate signals.

5. Sensor according to at least one of Claims 1 to 4, **characterized in that**, if a plurality of edges of a particular intermediate signal (S1*, S2*) appear directly in succession, only the first edge is effective in the sense of forming an edge of the sensor output signal (S5).

6. Sensor according to at least one of Claims 1 to 5, **characterized in that** the test circuit (14) is provided with a frequency detection device which checks the frequencies of the intermediate signals (S1*, S2*) and/or of the element output signals (S1, S2) and renders the sensor output signal (S5) and/or at least one intermediate signal (S1*, S2*) ineffective in the case of irregularities in the respective frequencies.

7. Method for monitoring and eliminating sensor errors in a sensor (3) for detecting the movement of an encoder, having at least two sensor elements (6, 7) which are arranged with an offset with respect to one another in the direction of movement of the encoder, and having a processing circuit (10, 14, 15) which converts the element output signals (S1, S2) at the outputs of the sensor elements (6, 7) into a sensor output signal (S5) which describes the movement of the encoder, a test circuit (14) in a processing circuit (10, 14, 15) at least indirectly monitoring the element output signals (S1, S2) and rendering the sensor output signal (S5) ineffective or correcting the latter if errors are determined in the element output signals (6, 7), at least two intermediate signals (S1*, S2*) being formed in an accounting stage (15), the frequency of which signals depends on the frequencies of the two separate element output signals (6, 7), and the test circuit (14) testing the intermediate signals (S1*, S2*) for deviations which are caused by errors in the element output signals (6, 7), **characterized in that**, in the absence of an edge of the one intermediate signal (S1*, *S2*),* the edges of the other intermediate signal (*S1**, S2*) are switched to be ineffective until an edge of the one intermediate signal (S1*, *S2**) occurs again, with the result that no edge is effective for forming the sensor output signal (S5) in this period of time.

8. Method according to Claim 7, **characterized in that** two intermediate signals (S1*, S2*) are preferably formed in the accounting stage (15), **in that** the formation of the edges of the intermediate signals by the test circuit is dependent on the edges of the element output signals (6, 7) which are phase-shifted with respect to one another and are regularly at the same frequency, and **in that** the test circuit (14) checks the intermediate signals in order to determine whether the occurring edges of the intermediate signals alternately come from different intermediate signals in temporal succession.

9. Method according to Claim 7 or 8, **characterized in that** the test circuit (14) switches off the sensor output signal (S5) if two or more edges of the intermediate signals (S1*, S2*) occurring in succession belong to the same intermediate signal.

10. Method according to at least one of Claims 7 to 9, **characterized in that** the edges of the sensor output signal (S5) are formed in the processing circuit (10, 14, 15) during alternating regular occurrence of the edges of the two intermediate signals (S1*, S2*) in such a manner that the sensor output signal is at twice the frequency of the intermediate signals, the edges of the sensor output signal being alternately associated with the edges of the intermediate signals.

11. Method according to at least one of Claims 7 to 10, **characterized in that**, if a plurality of edges of a particular intermediate signal (S1*, *S2**) appear directly in succession, only the first edge is effective in the sense of forming an edge of the sensor output signal (S5).

12. Method according to at least one of Claims 7 to 11, **characterized in that** the test circuit (14) is provided with a frequency detection device which checks the frequency of the intermediate signals (S1*, S2*) and/or of the element output signals (S1, S2) and renders the sensor output signal (S5) and/or at least one intermediate signal (S1*, S2*) ineffective in the case of irregularities in individual frequencies.

## Revendications

1. Détecteur (3) servant à saisir le déplacement d'un encodeur à surveiller et présentant
au moins deux éléments de détection (6, 7) disposés en décalage mutuel dans la direction de déplacement de l'encodeur et
un circuit de traitement (10, 14, 15) qui convertit en un signal (S5) de sortie de détecteur les signaux de sortie (S1, S2) présents sur les sorties des éléments de détection (6, 7), ce signal décrivant le déplacement de l'encodeur,
le circuit de traitement (10, 14, 15) étant doté d'un circuit de vérification (14) qui surveille au moins indirectement les signaux de sortie (S1, S2) des éléments et qui rend inactif ou corrige le signal de sortie (S5) du détecteur lorsqu'il constate des défauts dans les signaux de sortie (6, 7) des éléments,
au moins deux signaux intermédiaires (S1*, S2*) dont la fréquence dépend des fréquences des deux signaux distincts de sortie (6, 7) des éléments étant formés dans un étage de calcul (15),
le circuit de vérification (14) vérifiant sur les signaux intermédiaires (S1* et S2*) les écarts provoqués par des défauts des signaux de sortie (6, 7) des éléments,
**caractérisé en ce que**
en cas d'absence d'un flanc d'un des signaux intermédiaires (S1*, S2*), les flancs de l'autre signal intermédiaire (S1*, S2*) sont rendus inactifs jusqu'à ce qu'un flanc du premier signal intermédiaire (S1*, S2*) apparaisse, de sorte que dans cet intervalle de temps, aucun flanc n'est actif dans la formation du signal de sortie (S5) du détecteur.

2. Détecteur selon la revendication 1, **caractérisé en ce que** dans l'étage de calcul (15), deux signaux intermédiaires (S1*, S2*) sont formés, **en ce que** la formation des flancs des signaux intermédiaires par le circuit de vérification dépend des flancs des signaux de sortie (6, 7) des éléments déphasés l'un par rapport à l'autre mais à fréquence régulièrement identique et **en ce que** le circuit de vérification (14) vérifie en outre sur les signaux intermédiaires si les flancs des signaux intermédiaires qui alternent l'un par rapport à l'autre proviennent de signaux intermédiaires différents.

3. Détecteur selon les revendications 1 ou 2, **caractérisé en ce que** le circuit de vérification (14) débranche le signal de sortie (S5) du détecteur si deux ou plusieurs flancs successifs des signaux intermédiaires (S1*, S2*) font partie du même signal intermédiaire.

4. Détecteur selon au moins l'une des revendications 1 à 3, **caractérisé en ce que** les flancs du signal de sortie (S5) du détecteur sont formés dans le circuit de traitement (10, 14, 15) lorsque les flancs des deux signaux intermédiaires (S1*, S2*) apparaissent en alternance régulière, de telle sorte que le signal de sortie du détecteur possède une fréquence qui vaut le double de celle des signaux intermédiaires, les flancs du signal de sortie du détecteur étant associés en alternance aux flancs des signaux intermédiaires.

5. Détecteur selon au moins l'une des revendications 1 à 4, **caractérisé en ce qu'**au cas où plusieurs flancs d'un signal intermédiaire donné (S1*, S2*) surviennent directement l'un après l'autre, seul le premier flanc est actif dans la formation d'un flanc du signal de sortie (S5) du détecteur.

6. Détecteur selon au moins l'une des revendications 1 à 5, **caractérisé en ce que** le circuit de vérification (14) est doté d'un dispositif de détection de fréquence qui vérifie la fréquence des signaux intermédiaires (S1*, S2*) et/ou des signaux de sortie (S1, S2) des éléments et qui rend inactif le signal de sortie (S5) du détecteur et/ou au moins un signal intermédiaire (S1*, S2*) au cas où ces fréquences présentent des irrégularités.

7. Procédé de surveillance et d'élimination de défauts d'un détecteur (3) qui saisit le déplacement d'un encodeur présentant
au moins deux éléments de détection (6, 7) disposés en décalage mutuel dans la direction de déplacement de l'encodeur et
un circuit de traitement (10, 14, 15) qui convertit en un signal (S5) de sortie de détecteur les signaux de sortie (S1, S2) présents sur les sorties des éléments de détection (6, 7), ce signal décrivant le déplacement de l'encodeur,
et dans lequel un circuit de vérification (14) prévu dans un circuit de traitement (10, 14, 15) surveille au moins indirectement les signaux de sortie (S1, S2) des éléments et rend inactif ou corrige le signal de sortie (S5) du détecteur lorsque des défauts sont constatés dans les signaux de sortie (6, 7) des éléments,
au moins deux signaux intermédiaires (S1*, S2*) dont la fréquence dépend des fréquences des deux signaux distincts de sortie (6, 7) des éléments étant formés dans un étage de calcul (15),
le circuit de vérification (14) vérifiant sur les signaux intermédiaires (S1* et S2*) les écarts provoqués par des défauts des signaux de sortie (6, 7) des éléments,
**caractérisé en ce que**
en cas d'absence d'un flanc d'un des signaux intermédiaires (S1*, S2*), les flancs de l'autre signal intermédiaire (S1*, S2*) sont rendus inactifs jusqu'à ce qu'un flanc du premier signal intermédiaire (S1*, S2*) apparaisse, de sorte que dans cet intervalle de temps, aucun flanc n'est actif dans la formation du signal de sortie (S5) du détecteur.

8. Procédé selon la revendication 7, **caractérisé en ce que** dans l'étage de calcul (15), deux signaux intermédiaires (S1*, S2*) sont formés, **en ce que** la formation des flancs des signaux intermédiaires par le circuit de vérification dépend des flancs des signaux de sortie (6, 7) des éléments déphasés l'un par rapport à l'autre mais à fréquence régulièrement identique et **en ce que** le circuit de vérification (14) vérifie en outre sur les signaux intermédiaires si les flancs des signaux intermédiaires qui alternent l'un par rapport à l'autre proviennent de signaux intermédiaires différents.

9. Procédé selon les revendications 7 ou 8, **caractérisé en ce que** le circuit de vérification (14) débranche le signal de sortie (S5) du détecteur si deux ou plusieurs flancs successifs des signaux intermédiaires (S1*, S2*) font partie du même signal intermédiaire.

10. Procédé selon au moins l'une des revendications 7 à 9, les flancs du signal de sortie (S5) du détecteur sont formés dans le circuit de traitement (10, 14, 15) lorsque les flancs des deux signaux intermédiaires (S1*, S2*) apparaissent en alternance régulière, de telle sorte que le signal de sortie du détecteur possède une fréquence qui vaut le double de celle des signaux intermédiaires, les flancs du signal de sortie du détecteur étant associés en alternance aux flancs des signaux intermédiaires.

11. Procédé selon au moins l'une des revendications 7 à 10, **caractérisé en ce qu'**au cas où plusieurs flancs d'un signal intermédiaire donné (S1*, S2*) surviennent directement l'un après l'autre, seul le premier flanc est actif dans la formation d'un flanc du signal de sortie (S5) du détecteur.

12. Procédé selon au moins l'une des revendications 7 à 11, **caractérisé en ce que** le circuit de vérification (14) est doté d'un dispositif de détection de fréquence qui vérifie la fréquence des signaux intermédiaires (S1*, S2*) et/ou des signaux de sortie (S1, S2) des éléments et qui rend inactif le signal de sortie (S5) du détecteur et/ou au moins un signal intermédiaire (S1*, S2*) au cas où ces fréquences présentent des irrégularités.
